# EUROPÄISCHE PATENTSCHRIFT

(11) **EP 4 208 927 B1**
(45) Veröffentlichungstag und Bekanntmachung des Hinweises auf die Patenterteilung: **02.10.2024**
(21) Anmeldenummer: 21773303.9
(22) Anmeldetag: 31.08.2021
(51) Int. Cl.: H02G 11/00, F16G 13/16

(54) **TEILUNGSSTEG ZUR INNENAUFTEILUNG EINER ENERGIEFÜHRUNGSKETTE**
SEPARATOR FOR INTERNAL SUBDIVISION OF A CABLE DRAG CHAIN
SÉPARATEUR POUR SUBDIVISION INTERNE D'UNE CHAÎNE DE TRANSMISSION D'ÉNERGIE

(30) Priorität: 04.09.2020 DE 202020105121 U
(43) Veröffentlichungstag der Anmeldung: 12.07.2023
(73) Patentinhaber: Igus GmbH, 51147 Köln (DE)
(72) Erfinder: DOMMNIK, Jörg, 53819 Neunkirchen-Seelscheid (DE); HERMEY, Andreas, 53773 Hennef (DE)
(74) Vertreter: Lippert Stachow Patentanwälte Rechtsanwälte
(86) Internationale Anmeldenummer: PCT/EP2021/074062
(87) Internationale Veröffentlichungsnummer: WO 2022/049091

(56) Entgegenhaltungen:
- EP-B1- 0 343 192
- DE-A1- 102006 014 598
- DE-U1- 9 102 121

## Beschreibung

Die Erfindung betrifft allgemein das Gebiet der Energieführungsketten zum Führen von Leitungen, wie beispielsweise Kabeln oder Schläuchen. Energieführungsketten dienen typisch dazu, Versorgungsleitungen für Strom, Daten oder Medien zwischen einem Anschluss und einem dazu relativbeweglichen Anschluss an einem beweglichen Verbraucher zu führen. Sie umfassen typisch eine Vielzahl miteinander schwenkbar verbundener Kettenglieder.

Die Erfindung betrifft insbesondere einen sogenannten Teilungssteg bzw. Trennsteg für ein Kettenglied einer Energieführungskette.

Zumindest ein Teil der Kettenglieder ist jeweils aus zwei seitlich außen angeordneten Seitenlaschen bzw. Seitenteilen und mindestens einem Quersteg aufgebaut, gelegentlich auch Traverse genannt, welcher die Seitenlaschen parallel hält. Der bzw. die Querstege können fest oder lösbar (sog. Öffnungssteg) mit den Seitenlaschen verbunden sein. Im Querschnitt senkrecht zur Längsrichtung der Energieführungskette betrachtet, begrenzen die Seitenlaschen und Querstege einen Aufnahmeraum im Kettenglied. Die Kettenglieder bilden damit gemeinsam einen in Längsrichtung durchgehenden Führungskanal, in welchem die Leitungen aufgenommen sind.

In Anwendungen mit einer Vielzahl geführter Leitungen ist es vorteilhaft, den Aufnahmeraum bzw. den Führungskanal in getrennte Bereiche zu unterteilen, d.h. eine sogenannte Innenaufteilung der Energieführungskette vorzunehmen. So kann u.a. Reibung zwischen den Leitungen bedingt durch unterschiedliche Krümmungsradien bzw.

Relativbewegung im Umlenkbogen reduziert oder vermieden werden. Grundsätzlich sollten Leitungen mit stark unterschiedlichen Durchmessern getrennt voneinander geführt werden. Auch erlaubt die Innenaufteilung eine dauerbeständige Anordnung zur Gewichtsverteilung bei Leitungen mit unterschiedlichem Gewicht.

Die Innenaufteilung vermeidet u.a. ungewollte Bewegungen der Leitungen z.B. Verdrehungen (sog. "Korkenzieher" und dgl.) im Führungskanal oder das Verschieben von Leitungen übereinander, was z.B. zum Abquetschen von Schläuchen durch schwere elektrische Leitungen führen kann.

Zur vertikalen Unterteilung, d.h. zur Aufteilung der Breite des Aufnahmeraums, werden Trennstege oder Teilungsstege vorgesehen. Diese verlaufen im Wesentlichen parallel zu den Seitenlaschen und sind meist an den Querstegen gehalten. Trennstege für Glieder einer Energieführungskette beschreiben z.B. das Gebrauchsmuster DE 299 07 443 U1 oder die Patentanmeldung DE 43 13 242 A1 der Anmelderin.

Zur horizontalen Aufteilung, d.h. zur Unterteilung der nutzbaren Höhe des Aufnahmeraums, werden ähnlich wie Sprossen sog. Fachböden (auch Regalböden, Einsteckböden, o.ä.) vorgesehen. Diese können als Auflage für die Leitungen dienen. Sie verlaufen parallel zu den Querstegen, d.h. im Wesentlichen senkrecht zu den Seitenlaschen, und sind meist an Teilungsstegen bzw. Trennstegen gehalten. Fachböden sind im Patent EP 0 343 192 B1 beschrieben.

Als Teilungsstege werden vorliegend spezielle Trennstege verstanden, die zumindest einseitig, bevorzugt beidseitig eine Mehrzahl Halterungen für Fachböden bzw. Mittel zum Anbringen von Fachböden aufweisen. Teilungsstege bieten damit inhärent diverse Möglichkeiten zum wahlweisen Anbringen von Fachböden im Innenraum.

Eine bewährte Bauweise von Teilungsstegen, welche eine feingliedrige Höhenaufteilung mittels Fachböden erlaubt, zeigt ebenfalls das Patent EP 0 343 192 B1 der Anmelderin.

EP 0 343 192 B1 offenbart einen Teilungssteg mit einem plattenartigen Grundkörper mit oberen und unteren Endbereichen zur lösbaren Befestigung an den Querstegen, zwei großen Hauptseiten sowie zwei gegenüberliegenden Schmalseiten, die in einer Höhenrichtung zwischen den Endbereichen verlaufen. An beiden Hauptseiten sind jeweils eine Anzahl Haltenuten vorgesehen, welche sich im Wesentlichen senkrecht zur Höhenrichtung erstrecken. In jede Haltenut kann wahlweise ein plattenartiger Fachboden mit einem korrespondierenden Ende eingeschoben und gehaltert werden, wobei der Fachboden endseitig eine Art Feder bildet, welche mit der Haltenut in Art einer Feder-Nut-Verbindung zusammenwirkt.

Derartige Teilungsstege erlauben fein gegliederte Aufteilungen in Höhenrichtung. Durch kleinere Abstände zwischen den Haltenuten wird, im Vergleich zu durchgehenden Aufnahmeöffnungen bzw. Durchbrüchen für Fachböden, ein reduziertes Rastermaß zur wahlweisen Positionierung der Fachböden ermöglicht.

Für die Montage ist grundsätzlich eine leichte Handhabbarkeit und Montierbarkeit der Bauteile zur Innenaufteilung mit möglichst geringem Zeit- und Kraftaufwand wünschenswert. Auch für Wartungszwecke, z.B. zum Austausch einer Leitung, sollen die getrennten Bereiche der Innenaufteilung des Aufnahmeraums leicht zugänglich gemacht werden können, was meist eine Demontage von Fachböden erfordert. Ebenfalls wünschenswert ist es, die Aufteilung bei Bedarf leicht verändern zu können, z.B. wenn nachträglich unterteilt werden muss. Bei bisher bekannten Lösungen zur Innenaufteilung verbleibt Verbesserungsbedarf hinsichtlich einer einfachen Handhabung bzw. der Benutzerfreundlichkeit.

Ausgehend vom geschilderten Stand der Technik liegt eine erste Aufgabe der vorliegenden Erfindung darin, eine Lösung zur Innenaufteilung, insbesondere einen hierzu weiterentwickelten Teilungssteg vorzuschlagen, welcher die Handhabung bei Montage und Wartung vereinfacht bzw. benutzerfreundlicher gestaltet ist.

Dies wird erreicht mit einem Teilungssteg nach Anspruch 1 bzw. mit einem Kettenglied nach Anspruch 14 bzw. eine Energieführungskette nach Anspruch 15.

Erfindungsgemäß wird bei einem Teilungssteg bzw. Trennsteg nach dem Oberbegriff aus Anspruch 1 vorgeschlagen, dass zumindest einige und vorzugsweise alle Haltenuten jeweils von der einen zur anderen Schmalseite durchgehend ausgeführt sind und jeweils an jeder Schmalseite eine Einführöffnung aufweisen. Somit kann ein Fachboden jeweils beidseitig bzw. von beiden Seiten bzw. in beide (Fahrt-)Richtungen der Kette durch die entsprechende Einführöffnung und somit wahlweise in einer von zwei entgegengesetzten Montagerichtungen in die jeweilige Haltenuten eingeführt und wieder entnommen werden. Weiterhin ist erfindungsgemäß vorgesehen, dass der Teilungssteg eine Sicherungseinrichtung bzw. einen Sicherungsmechanismus aufweist, welche den bzw. die montierten Fachböden gegen ungewolltes Verschieben in beiden Montagerichtungen und damit gegen ungewolltes Lösen aus der jeweiligen Haltenut sichert.

Die Zugänglichkeit der Haltenuten in beide entgegengesetzte Richtungen bietet beim Einfügen und Herausnehmen der Fachböden in der Praxis entscheidende Vorteile und steigert die Benutzerfreundlichkeit, da der Benutzer keine besondere Montage- bzw. Demontagerichtung der Fachböden mehr beachten muss. Auch ist ein alternierendes Arbeiten in beide Richtungen möglich, was bei mehreren übereinander angeordneten Fachböden vorteilhaft sein kann. Hinsichtlich der Sicherungseinrichtung bestehen unterschiedliche Möglichkeiten, insbesondere solche welche mit geringem Kraftaufwand bedienbar sind.

Das Einfügen und Entnehmen der Fachböden in jeweilige Haltenuten kann insbesondere durch translatorisches Einschieben und Herausschieben in Längsrichtung der Energieführungskette bzw. senkrecht zur Höhenrichtung erfolgen.

Der vorgeschlagene Teilungssteg hat dazu an zumindest einem überwiegenden Anteil der Haltenuten und bevorzugt an jeder Haltenut eine erste Einführöffnung an einer Schmalseite, eine zweite Einführöffnung an der gegenüberliegenden anderen Schmalseite, d.h. dass die Haltenuten beidseitig offen münden bzw. zugänglich sind. Dies kann insbesondere für alle Haltenuten an beiden Hauptseiten vorgesehen sein. Mit den beiden Einführöffnungen mündet jede Haltenut im Wesentlichen in die Längsrichtung der Energieführungskette und ist somit beidseitig offen. Eine Haltenut haltert jeweils ein korrespondierend gestaltetes Ende des Fachbodens in Richtung senkrecht zum Grundkörper. Die Haltenuten verlaufen bevorzugt senkrecht zur Höhenrichtung und parallel zur Hauptebene zwischen den beiden Hauptseiten des Grundkörpers. Die Haltenuten können insbesondere als Vertiefungen in den Hauptseiten ausgeführt sein, deren Querschnitt senkrecht zur Haupteben eine formschlüssige Halterung erlaubt, insbesondere in Art einer Feder-Nut-Verbindung, z.B. mit Schwalbenschwanz-Form oder T-Form oder dergleichen.

Die Schmalseiten können je nach Bauhöhe die Längsseiten der Hauptseiten bilden, wobei die Endbereiche die kurzen Seiten darstellen. Die Richtungsangaben "Höhe" und "Breite" beziehen sich auf den Aufnahmeraum und bezeichnen vorliegend Richtungen in der Querschnittsebene senkrecht zur Längsrichtung der Energieführungskette. Horizontal bedeutet vorliegend in Richtung der Breite des Aufnahmeraums und vertikal in Richtung der Höhe des Aufnahmeraums, jeweils ungeachtet der tatsächlichen räumlichen Orientierung des Kettenglieds. Die Begriffe "oben" und "unten" sind ebenfalls nicht absolut zu verstehen, sondern auf eine beispielhafte Raumanordnung bezogen und insoweit vertauschbar. Die Begriffe "parallel" und "senkrecht" sind vorliegend technisch und nicht streng geometrisch zu verstehen. Auch geringe Abweichungen von geometrischer Parallelität um kleinere Winkelmaße werden als parallel verstanden.

Zur Vermeidung von Kraftaufwand für eine kraftschlüssige Sicherung der Fachböden ist in bevorzugter Ausführungsform vorgesehen, dass die Sicherungseinrichtung einen Verriegelungsschieber aufweist, welcher in einer Aufnahme im Grundkörper in Höhenrichtung zwischen einer Verriegelungsposition und einer Entriegelungsposition verschieblich ist und Riegelelemente aufweist, wobei jedes Riegelelement einer Haltenut zugeordnet ist. Dabei ist jedes Riegelelement in die zugeordnete Haltenut verschiebbar zur sichernden Zusammenwirkung mit dem Fachboden, insbesondere mit einer endseitigen Aussparung an einem Fachboden. Bevorzugt sind an demselben Verriegelungsschieber alle erfoderlichen Riegelelemente vorgesehen, sodass eine der Gesamtzahl der Haltenuten entsprechende Anzahl Riegelelemente vorgesehen sind.

Jedes Riegelelement wirkt dabei vorzugsweise als Riegel bzw. Sperrelement mit einer als Falle für den Riegel dienenden Aussparung an einem Fachboden zusammen.

Es kann ein Verriegelungsschieber, z.B. mittig vorgesehen sein, für die Haltenuten an beiden Hauptseiten, an jeder Hauptseite ein Verriegelungsschieber für die dortigen Haltenuten, oder z.B. auch an beiden Schmalseiten für beide Hauptseiten jeweils ein gemeinsamer Verriegelungsschieber zum Sperren der Stirnenden der Fachböden. Die Sicherungseinrichtung kann also im Wesentlichen aus einem Verriegelungsschieber bestehen, der mittig im Grundkörper angeordnet ist. In einer besonders bevorzugten Ausführungsform wird ein gemeinsamer mittiger Verriegelungsschieber für die Haltenuten an beiden Hauptseiten vorgesehen. Hierbei kann der plattenartige Grundkörper zwei vorzugsweise baugleiche bzw. als Gleichteile hergestellte Plattenteile umfassen, welche jeweils an einer Außenseite eine Anzahl durchgehende Haltenuten bilden und an einer Innenseite eine Ausnehmung für den Verriegelungsschieber bilden. Die Plattenteile können durch geeignete Verbindungselemente miteinander verbindbar sein, z.B. durch konjugierte Verbindungselemente miteinander verrastbar oder durch Schnappverbinder aneinander befestigbar usw.

Zur weitergehenden Vereinfachung der Bedienung kann der Verriegelungsschieber mindestens einen Betätigungsvorsprung aufweisen, welcher an einer Schmalseite des Grundkörpers vorsteht, um eine erleichterte Bedienung von Hand ähnlich einer Schiebertaste oder dgl. zu erlauben. Vorzugsweise wird auch hier eine beidseitige Bedienbarkeit erzielt, indem der Verriegelungsschieber zwei gegenüberliegende, vorzugsweise symmetrische Betätigungsvorsprünge aufweist, welche jeweils an einer der Schmalseiten des Grundkörpers vorstehen. Der Betätigungsvorsprung kann dabei endseitig eine Schiebertaste bilden.

Der Verriegelungsschieber ist vorzugsweise mit den Riegelelementen und ggf. mit Betätigungsvorsprüngen einteilig ausgeführt.

In einer weiteren Ausführungsform umfasst die Sicherungseinrichtung zwei Verriegelungsschieber. Diese können jeweils in einer Aufnahme im Grundkörper in Höhenrichtung zwischen einer Verriegelungsposition und einer Entriegelungsposition verschieblich sein und Riegelelemente, z.B. der Anzahl der Haltenuten entsprechend, aufweisen. Auch hier ist bevorzugt jedes Riegelelement einer Haltenut zugeordnet und in diese verschiebbar zur sichernden Zusammenwirkung mit einem Fachboden, z.B. mit einer endseitigen Aussparung. In dieser Ausführungsform kann der Grundkörper zwei senkrecht zur Höhenrichtung versetzte Aufnahmen für je einen Verriegelungsschieber aufweisen. Dabei kann jeweils an jeder Hauptseite eine der beiden Aufnahmen bzw. der darin gelagerte Verriegelungsschieber vorgesehen sein.

In allen Ausführungsformen mit Verriegelungsschieber(n) ist es vorteilhaft, wenn jeder Verriegelungsschieber in Entriegelungsposition mit einem Endvorsprung am oberen oder unteren Endbereich des Grundkörpers in Höhenrichtung vorsteht. Dies ermöglicht es, durch Schließen des Querstegs sicherzustellen, dass der Verriegelungsschieber in Verriegelungsstellung verschoben ist, d.h. bei geschlossenem Quersteg und Kettenglied die Fachböden gegen ungewolltes Lösen gesichert sind. Somit wird auch ein ungewolltes Entriegeln bei geschlossenem Kettenglied (mit beidseitig montiertem/geschlossenem Quersteg) versperrt bzw. verhindert, da nur bei offenem Quersteg ein Entriegeln möglich ist. Bevorzugt ist der Verriegelungsschieber so gestaltet, dass er je nachdem welcher Quersteg geöffnet (Innenradius oder Außenradius) ist, alternierend mit dem Endvorsprung über den oberen und den unteren Endbereich vorstehen kann und hat eine geeignete Bauhöhe.

Eine geeignete Sicherungseinrichtung muss jedoch nicht zwingend als Verriegelung mit Schieber ausgeführt sein. In einer konstruktiv einfachen, alternativen Ausführungsform kann die Sicherungseinrichtung zusammenwirkende Rastelemente aufweisen. Es können z.B. an den Haltennuten und darin eingreifenden Endbereichen der Fachböden zusammenwirkende Rastvertiefungen und/oder Rastvorsprünge aufweisen. Hierbei sind vorzugsweise an jeder Haltenut mindestens eine Rastvertiefung und/oder ein Rastvorsprung vorgesehen zur rastenden Zusammenwirkung mit einem entsprechend konjugierten endseitigen Rastelement am Fachboden. Ergänzend oder alternativ kommen als Rastelemente auch federnde Rastzungen, vorzugsweise an den Enden der Fachböden, in Betracht. Dies können mit entsprechenden Rastkanten, z.B. einer Rastvertiefung, an einer Begrenzungsfläche der Rastnuten zusammenwirken. Insbesondere kann an beiden Seiten des in die Rastnut eingreifenden Endbereichs des Fachbodens jeweils eine federnde Rastzunge bzw. ein federnder Rasthaken vorgesehen sein, die mit einer jeweiligen Rastkante an einer Begrenzungsfläche der Rastnut zusammenwirkt, z.B. in Art eines Widerhakens oder dgl., um den Fachboden gegen ungewolltes Lösen in Längsrichtung zu sperren bzw. zu sichern, und beim Einschieben unwirksam ist.

Für eine robuste, formschlüssige Halterung in Horizontalrichtung bzw. senkrecht zur Hauptebene haben die Haltenuten an beiden Hauptseiten jeweils einen Querschnitt senkrecht zur Hauptebene in T-Form, um mit einem entsprechenden Vorsprung am Ende eines Fachbodens zur Halterung des Fachbodens zusammenwirken. Alternativ zum T-förmigen Querschnitt kann auch ein Querschnitt in Schwalbenschwanzform oder dgl. vorgesehen sein.

Bevorzugt verlaufen die Haltenuten zueinander parallel und jeweils senkrecht zur Höhenrichtung durchgehend von der einen zur anderen Schmalseite. Die Haltenuten sind vorzugsweise an jeder Hauptseite jeweils paarweise auf gleicher Höhe voneinander abgewandt vorgesehen, dies ist jedoch nicht zwingend. Auch ein sogenanntes Seitenteil zur Anlage an den Seitenlaschen, d.h. mit nur einseitigen Haltenuten, wird vorliegend als Teilungssteg verstanden.

Bevorzugt haben beide Endbereiche des Grundkörpers eine Befestigungsvorrichtung zum lösbaren Befestigen durch Kraft- und/oder Formschluss an einem oberen und einem unteren Quersteg. Mindestens ein Endbereich, vorzugsweise beide, kann dabei als Rastfuß zum Verrasten mit einem Quersteg in an sich bekannter Bauart ausgeführt sein.

Vorzugsweise ist der Grundkörper bezüglich seiner Höhenmittelebene spiegelsymmetrisch ausgeführt, sodass die Endbereiche oben und unten vertauschbar sind und es auf diese Orientierung bei der Montage nicht ankommt.

Aufgrund der beidseitig gleichwertigen Bedienbarkeit sind diverse Symmetrieeigenschaften des Teilungsstegs bevorzugt vorgesehen.

Bevorzugt ist der Grundkörper bezüglich seiner Hauptebene spiegelsymmetrisch ausgeführt, dies ist insbesondere vorteilhaft, wenn ein gemeinsamer Schieber bzw. Riegel beidseitig an beiden Hauptseiten eingesetzt wird. Alternativ kann der Grundkörper bezüglich seiner Höhenmittelachse axialsymmetrisch ausgeführt sein, z.B. wenn an jeder Hauptseite ein eigener Schieber bzw. Riegel vorgesehen ist.

Die Erfindung ist besonders vorteilhaft bei feingliedriger Innenaufteilung mit vergleichsweise vielen Positionen für Fachböden, d.h. wenn an jeder Hauptseite jeweils mindestens fünf Haltenuten vorgesehen sind, sodass viele Wahlmöglichkeiten bestehen. Insbesondere bei Verwendung eines Verriegelungsschiebers können dabei alle eingeführten Fachböden durch eine einzige Betätigung gleichzeitig verriegelt und entriegelt werden.

Es kann zur weiteren Erleichterung vorgesehen sein, dass die beiden Einführöffnungen jeder Haltenut jeweils gegenüberliegende endseitige Einführschrägen oder Einführrundungen aufweisen. Solche Einführschrägen oder Einführrundungen können insbesondere beidseitig und paarweise in spiegelsymmetrischer Anordnung bzgl. der Längsachse der Haltenut vorgesehen sein.

Die Erfindung betrifft ebenfalls ein Kettenglied für eine Energieführungskette, umfassend zwei Seitenlaschen und mindestens einen Quersteg, welcher die Seitenlaschen miteinander verbindet, um einen Aufnahmeraum für Leitungen zu definieren, wobei das Kettenglied mit zwei oder mehr erfindungsgemäßen Teilungsstegen und mindestens einem durch diese Teilungsstege jeweils endseitig gehaltenen Fachboden aufweist. Die Erfindung betrifft ferner eine Energieführungskette umfassend eine Vielzahl Kettenglieder, wobei zumindest jedes zweite Kettenglied erfindungsgemäße Teilungsstege aufweist. Ferner betrifft die Erfindung einen Bausatz zur Innenaufteilung von Kettengliedern für eine Energieführungskette, umfassend mindestens zwei erfindungsgemäße Teilungsstege sowie mindestens einen korrespondierenden Fachboden, und schließlich auch die Verwendung des erfindungsgemäßen Teilungsstegs zur Innenaufteilung in einer Energieführungskette.

Weitere Einzelheiten, Merkmale und Vorteile der Erfindung sind der nachfolgenden, ausführlicheren Beschreibung bevorzugter Ausführungsbeispiele anhand der beiliegenden Figuren zu entnehmen. Diese zeigen rein beispielhaft:
- FIG.1:: ein Kettenglied einer Energieführungskette gemäß einem Ausführungsbeispiel in Explosionsdarstellung;
- FIG.2A-2B:: das Kettenglied nach FIG.1 in Frontansicht (FIG.2A) und in Schnittdarstellung (FIG.2B);
- FIG.3:: ein Teilungssteg gemäß einem ersten Ausführungsbeispiel in Explosionsdarstellung;
- FIG.4A-4B:: ein Fachboden in Draufsicht (FIG.4A) und in Frontansicht (FIG.4B);
- FIG.5A-5B:: der Teilungssteg gemäß FIG.3 in Seitenansicht mit dem Verriegelungsschieber in der Entriegelungsposition (FIG.5A) und in der Verriegelungsposition (FIG.5B);
- FIG.6A-6B:: Detailansichten zu FIG.5A (FIG. 6A) bzw. 5B (FIG.6B);
- FIG.7A-7B:: den Teilungssteg aus FIG.3 mit dem Verriegelungsschieber in Verriegelungsposition mit einem eingeschobenen Fachboden in Frontansicht (FIG.7A) sowie in Schnittdarstellung entlang AF (FIG.7B) ;
- FIG.8A-8B:: den Teilungssteg nach FIG.3 mit dem Verriegelungsschieber in Entriegelungsposition (FIG.8A) und in Verriegelungsposition (FIG.8B);
- FIG.9A-9B:: ein weiteres, zweites Ausführungsbeispiel eines Teilungsstegs mit zwei Verriegelungsschiebern in Entriegelungsposition (FIG.9A) und in Verriegelungsposition (FIG.9B);
- FIG.10A-10C:: einen Grundkörper des Teilungsstegs nach FIG.9A-9B (FIG.10A), einen Verriegelungsschieber des Teilungsstegs nach FIG.9A-9B (FIG.10B), sowie einen Fachboden passend zum Teilungssteg nach FIG.9A-9B;
- FIG.11A-11C:: Detailansicht des Teilungsstegs nach FIG.9A (FIG.11A), nach FIG.9B (FIG.11B) sowie eine Teilansicht des Teilungsstegs mit einem eingefügten Fachboden in einem Schnitt entlang der Hauptebene des Fachbodens (FIG.11C);
- FIG.12A-12B:: perspektivische Ansichten eines weiteren, dritten Ausführungsbeispiels des Teilungsstegs (FIG.12A) und des entsprechenden Fachbodens (FIG.12B); und
- FIG.13A-13B:: Detailansicht des Teilungsstegs nach FIG.12A (FIG.13A), sowie eine Teilansicht des Teilungsstegs mit einem eingefügten Fachboden in einem Schnitt entlang der Hauptebene des Fachbodens (FIG.13B).

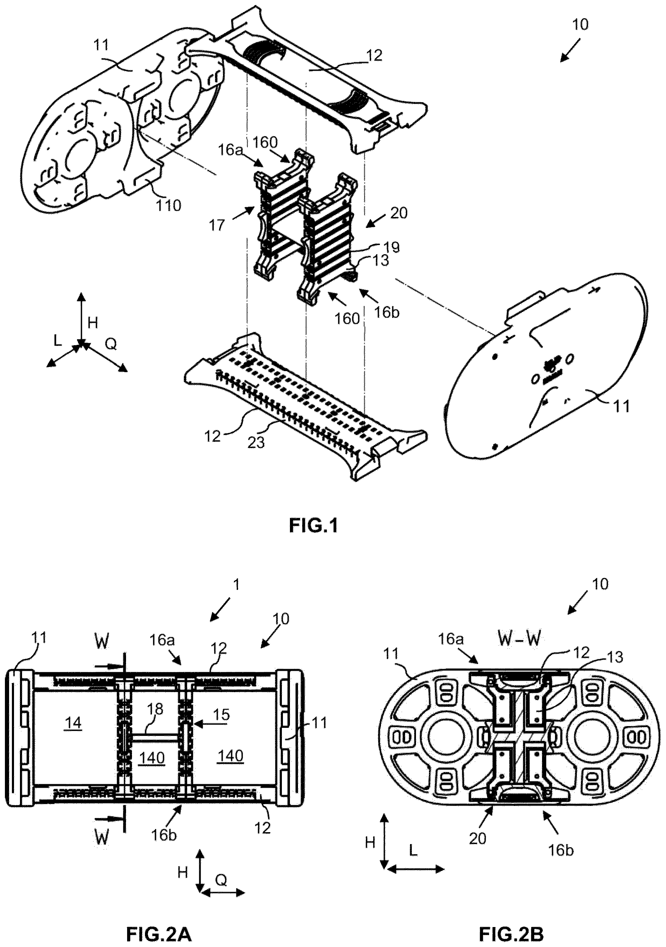

FIG.1 und FIG.2A veranschaulichen in einer Explosionsdarstellung bzw. in Frontansicht einen beispielhaften Innenaufbau eines Kettenglieds 10 einer Energieführungskette 1 zum aktiven Führen von Leitungen, wie z.B. Kabeln und Schläuchen (nicht gezeigt). Eine Vielzahl Kettenglieder 10 werden in einer Längsrichtung L senkrecht zur Ebene der FIG.2A schwenkbar miteinander zu einer Energieführungskette 1 verbunden. Die Längsrichtung L entspricht der Längserstreckung der geführten Leitungen. Die Kettenglieder 10 bestehen hier aus Einzelteilen und haben zumindest zwei Seitenlaschen 11. Bei jedem oder z.B. jedem zweiten Kettenglied 10 sind die Seitenlaschen 11, wie in FIG.1, 2A gezeigt, durch zwei parallele, identische Querstege 12 kastenförmig fest verbunden, auf Abstand in Querrichtung Q des Kettenglieds 10 senkrecht zur Längsrichtung L und parallel zueinander gehalten.

Im gezeigten Beispiel sind die Querstege 12 lösbar (sog. Öffnungsstege). Die Querstege 12 werden dazu mittels endseitigen Befestigungsbereichen, z.B. mittels Klemmaufnahmen an Hörnern 110 (in FIG.1 angedeutet) der Seitenlaschen 11, lösbar bzw. schwenkbar an den Seitenlaschen 11 befestigt. Die Querstege 12 eines Kettenglieds 10 sind in der Höhenrichtung H voneinander beabstandet. Die Höhenrichtung H verläuft senkrecht zur Längsrichtung L und senkrecht zur Querrichtung Q. Die Seitenlaschen 11 und Querstege 12 begrenzen einen Aufnahmeraum 14 für die zu führenden Leitungen. Beide Querstege 12 können somit als Öffnungsstege ausgeführt sein, um im geöffneten Zustand einen Zugang zum Aufnahmeraum 14 zu erlauben.

Die Energieführungskette 1 ist aus einer Vielzahl in Längsrichtung L schwenkbar miteinander verbundener Kettenglieder 10 zusammengesetzt. Beim Führen von Leitungen zwischen zwei relativ zueinander beweglichen Anschlussstellen kann die Energieführungskette 1 einen Obertrum, einen Untertrum und dazwischen einen um eine Umlenkachse gekrümmten Abschnitt, den Umlenkbogen, bilden. Der Aufbau einer Energieführungskette 1 ist an sich bekannt und kann beliebig sein, z.B. mit gekröpften Seitenlaschen oder alternierenden Innen- und Außenlaschen als Seitenlaschen 11. Insbesondere kommen auch zweiteilige Kettenglieder in Betracht, bei welchen die zwei Seitenlaschen 11 und ein Quersteg 12 aus einem Stück, d.h. einteilig hergestellt sind und nur der andere Quersteg 12 lösbar ist (nicht gezeigt).

Zur Innenaufteilung ist es bekannt, wie in FIG.2A beispielhaft gezeigt, vertikale Teilungsstege 20 zur Aufteilung des Aufnahmeraums 14 in der Querrichtung Q und horizontale Fachböden 18 zur Aufteilung des Aufnahmeraums 14 in der Höhenrichtung H vorzusehen.

Der Teilungssteg 20 weist typisch einen plattenartigen bzw. flachen Grundkörper 13 auf, mit einer Hauptebene, die im bestimmungsgemäß montierten Zustand des Teilungsstegs 20 in einem Kettenglied 10 in der Längsrichtung L und in der Höhenrichtung H parallel zu den Seitenlaschen 11 verläuft. Die Fachböden 18 sind ebenfalls plattenartig ausgebildet und verlaufen im bestimmungsgemäß montierten Zustand im Kettenglied 10 parallel zu den Querstegen 12. Trennstege 20 und Fachböden 18 können in identischer Anordnung an jedem n-ten Kettenglied 10, insbesondere jedem zweiten Kettenglied 10 vorgesehen sein, um den Aufnahmeraum 14 zur geordneten und besser geschützten Führung der Leitungen in gleichbleibende Kompartimente oder Fächer 140 aufzustellen. Die Darstellung in FIG.2A ist hier lediglich beispielhaft und vereinfacht, es sind typisch weitere Teilungsstege 20 und weitere Fachböden 18 vorgesehen.

Der Teilungssteg 20 weist in der Höhenrichtung H zwei Endbereiche 16a, 16b mit jeweils einer Befestigungsvorrichtung, hier mit jeweils einem klammerartigen Rastfuß 160 auf, und kann zumindest an einem der Endbereiche 16a, 16b an den Stirnseiten 23 der Querstege 12 an wählbarer Position in der Querrichtung Q bzw. in Richtung der Länge des Querstegs 12 sowie in der Längsrichtung L befestigt sein, z.B. durch eine Rastverbindung. Die Querstege 12 können entlang deren Stirnseiten 23 Zahnleisten aufweisen, wie in FIG. 1 gezeigt ist, zum Zusammenwirken mit den Rastfüssen 160 der Teilungsstege 20. Die Querstege 12 sind jedenfalls in Längsrichtung L des Kettenglieds 10 bzw. in Richtung der Breite des Querstegs 12 gesichert.

Die Fachböden 18 sind an den Teilungsstegen 20 in wählbaren Stufen bzgl. der Höhenrichtung H anzubringen. FIG.1 und 2A zeigen hierbei beispielhaft nur einen Fachboden 18, der einen Teil des Aufnahmeraums 14 zwischen zwei Teilungsstegen 20 aufteilt.

Der Grundkörper 13 des Teilungsstegs 20 hat ferner zwei einander abgewandte Hauptseiten 15, die parallel zur Hauptebene verlaufen, sowie zwei einander abgewandte Schmalseiten 17, die sich jeweils senkrecht zu den Hauptseiten 15 in der Höhenrichtung H von dem oberen Endbereich 16a zum unteren Endbereich 16b erstrecken. Der Grundkörper 13 weist an seinen Hauptseiten 15 jeweils mehrere identisch gestaltete Haltenuten 19 zur Aufnahme von Fachböden 18 auf. Die Haltenuten 19 erstrecken sich parallel zueinander und durchgehend von einer Schmalseite 17 zu der anderen senkrecht zur Höhenrichtung H. Jede Haltenut 19 mündet an jeder Schmalseite 17 in eine jeweilige Einführöffnung 170. Ein entsprechend profiliertes Ende eines Fachbodens 18 kann somit in die jeweilige Haltenut 19 von jeder Schmalseite 17 her, d.h. in jeder der zwei Montagerichtungen entlang der Längsrichtung L eingeschoben und herausgenommen werden.

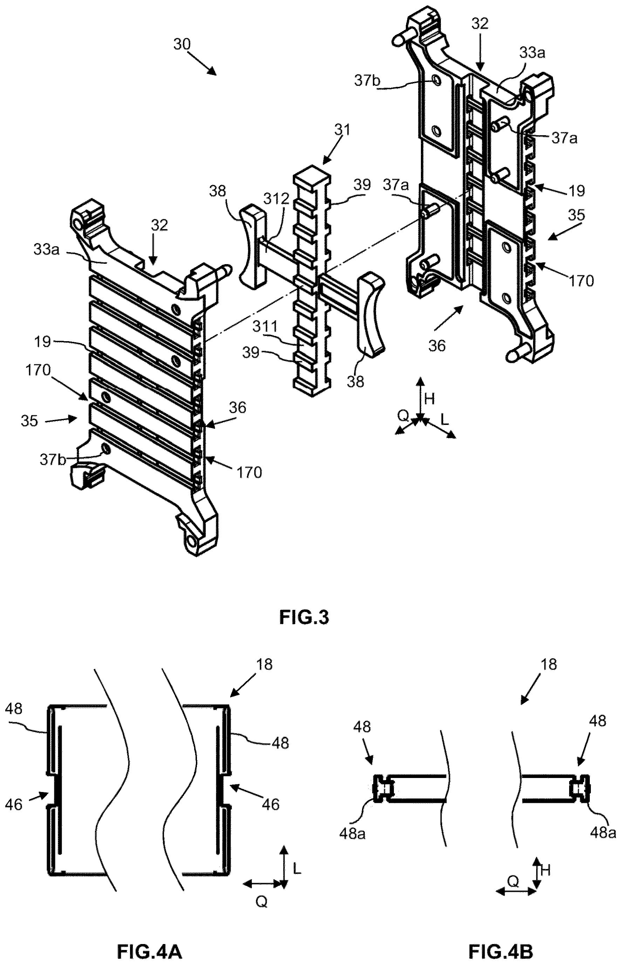

FIG.3 zeigt ein erstes Ausführungsbeispiel eines Teilungsstegs 30 in Explosionsansicht. Um die Fachböden 18 gegen ungewolltes Verschieben in Längsrichtung L und unbeabsichtigtes Lösen aus der Haltenut 19 zu sichern, weist der Teilungssteg 30 eine Sicherungseinrichtung mit einem Verriegelungsschieber 31 auf.

Der Teilungssteg 30 hat einen Grundkörper 33, der eine Spiegelsymmetrie in der Hauptebene (vgl. W-W in FIG.2A) aufweist und aus zwei gleichen Plattenteilen 33a zusammengesetzt ist. Jedes der Plattenteile 33a ist ebenfalls symmetrisch zur Höhenmittelebene senkrecht zur Hauptebene. Weiterhin ist jedes der beiden baugleichen Plattenteile 33a punktsymmetrisch zur Mittelachse, welche als gestrichelte Linie in FIG. 3 durch die Symmetriezentren der beiden Plattenteile 33a verläuft.

Das Plattenteil 33a hat eine Außenseite 35, die eine der Hauptseiten 15 des Grundkörpers bildet und die Haltenuten 19 aufweist, und eine der Außenseite 35 abgewandte Innenseite 36, die Rastvorsprünge 37a und korrespondierende Vertiefungen 37b als Verbindungselemente zum Verrasten mit dem zweiten Plattenteil 33a zu einem Grundkörper 33 aufweist. Ferner weist die Innenseite 36 eine kreuzförmige Ausnehmung 32 auf. Wenn die beiden Plattenteile 33a zu einem Grundkörper 33 zusammengesetzt sind, bilden die Ausnehmungen 32 eine Aufnahme 34 für den Verriegelungsschieber 31, sodass der Verriegelungsschieber 31 mittig im Grundkörper 33 aufgenommen werden kann.

Der Verriegelungsschieber 31 ist in der Aufnahme 34 des Teilungsstegs 30 verschieblich in der Höhenrichtung H zwischen einer Verriegelungsposition und einer Entriegelungsposition gelagert. Der Verriegelungsschieber 31 im in FIG.3 dargestellten Ausführungsbeispiel ist kreuzförmig ausgeführt, mit einem vertikalen Balken 311, der sich in der Höhenrichtung H erstreckt, und einem horizontalen Balken 312 senkrecht zum vertikalen Balken 311. Die Begriffe vertikal und horizontal beziehen sich vorliegend auf die bestimmungsgemäße Position des Verriegelungsschiebers 31 in einem Kettenglied 10, wobei vertikal entlang der Höhenrichtung H und horizontal entlang der Längsrichtung L bedeutet. Die räumliche Orientierung kann je nach Lage des Kettenglieds bzw. der Energieführungskette verschieden sein.

Der Verriegelungsschieber 31 weist an beiden Enden des horizontalen Balkens 312 jeweils einen Betätigungsvorsprung 38 auf, der zum manuellen Verstellen des Verriegelungsschiebers 31 zwischen der Entriegelungs- und der Verriegelungsposition ergonomisch geformt ist. Wenn der Verriegelungsschieber 31 zwischen den beiden Plattenteilen 33a des Grundkörpers 33 montiert ist, stehen die beiden Betätigungsvorsprünge jeweils an einer Schmalseite 17 des Grundkörpers 33 vor. Hierzu sind die Ausnehmungen 32 ebenfalls kreuzförmig und münden an den Schmalseiten 17.

Der vertikale Balken 311 weist beidseitig eine Reihe Riegelelemente 39 in Form von blockartigen Vorsprüngen auf, deren Anzahl der Anzahl der Haltenuten 19 der jeweiligen Hauptseite entspricht. Die Riegelelemente 39 stehen in Richtung senkrecht zur Hauptebene vor und sind in demselben vertikalen Rasterabstand wie die Haltenuten 19 angeordnet. Der Verriegelungsschieber 31 ist als einteiliges Spritzgussteil mit den Riegelelementen 39 hergestellt.

Wenn der Verriegelungsschieber 31 sich in der Verriegelungsposition befindet, erstrecken sich die Riegelelemente 39 in die jeweilige Haltenut 19 hinein und können dort etwa mittig liegen.

FIG.4A, 4B zeigen einen Fachboden 18, der plattenartig und länglich ausgebildet ist, mit einer Erstreckung in der Querrichtung Q zwischen den Enden 48. Die Enden 48 weisen in Stirnansicht in FIG.4B jeweils einen endseitigen Vorsprung 48a auf, der sich in der Längsrichtung L erstreckt und zum Profil der Haltenut 19 komplementär ist, im gezeigten Beispiel T-förmig, zum Einschieben des Endes 48 in die Haltenut 19. Auch ein anderes, bspw. schwalbenschwanzförmiges Profil der Haltenut 19 und der Enden 48 der Fachböden 18 ist möglich. Mit dem Profil ist der eingeschobene Fachboden 18 in der Querrichtung Q senkrecht zur Hauptebene des Teilungsstegs 30 gesichert.

Zur Sicherung des Fachbodens 18 in der Längsrichtung L, d.h. in die Längsrichtung der Haltenut 19, weisen die Enden des Fachbodens 18 jeweils eine Aussparung 46 zum Zusammenwirken mit einem zugeordneten, jeweiligen Riegelelement 39 auf. Zum Einschieben eines Endes 48 eines Fachbodens 18 in die Haltenut 19 muss sich der Verriegelungsschieber 31 in der Entriegelungsposition befinden. Wenn ein Ende 48 des Fachbodens 18 in der Haltenut 19 aufgenommen ist, kann der Verriegelungsschieber 31 in seine Verriegelungsposition verstellt werden, in der die Riegelelemente 39 sich jeweils in eine Haltenut 19 erstrecken und in die endseitige Aussparung 46 des Fachbodens 18 eingreifen. In dieser Position ist der Fachboden 18 in die Längsrichtung L am Teilungssteg 30 festgelegt bzw. gesichert und kann nicht oder nur geringfügig entlang der Haltenut 19 verschoben werden.

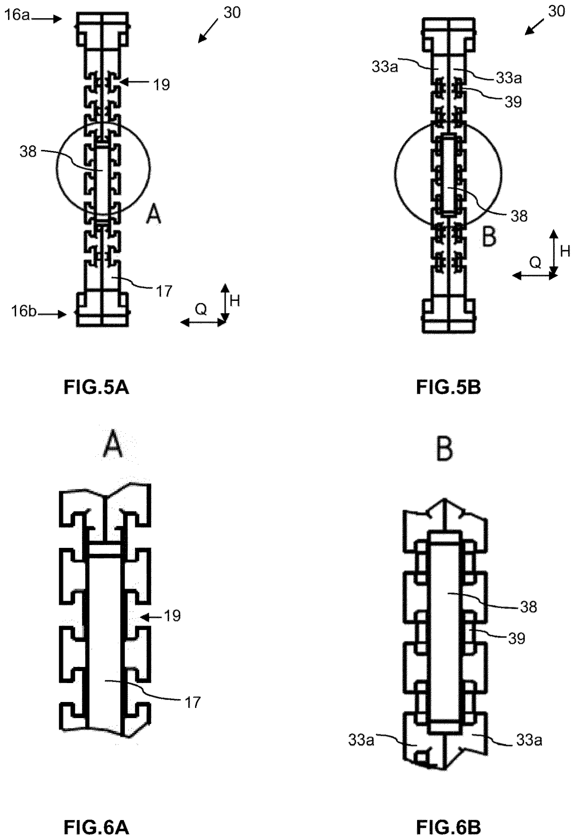

FIG.5A und 5B (sowie FIG.6A und 6B jeweils als vergrößerter Ausschnitt) zeigen in Seitenansicht entlang der Längsrichtung L den Teilungssteg 30 mit dem Verriegelungsschieber 31 in der Entriegelungsposition (FIG.5A, 6A) und in der Verriegelungsposition (FIG.5B, 6B). Die Haltenuten 19 sind in der Entriegelungsposition frei zum Einschieben der Fachböden 18, wogegen in der Verriegelungsposition die Haltenuten 19 durch die zugeordneten Riegelelemente 39 gesperrt sind.

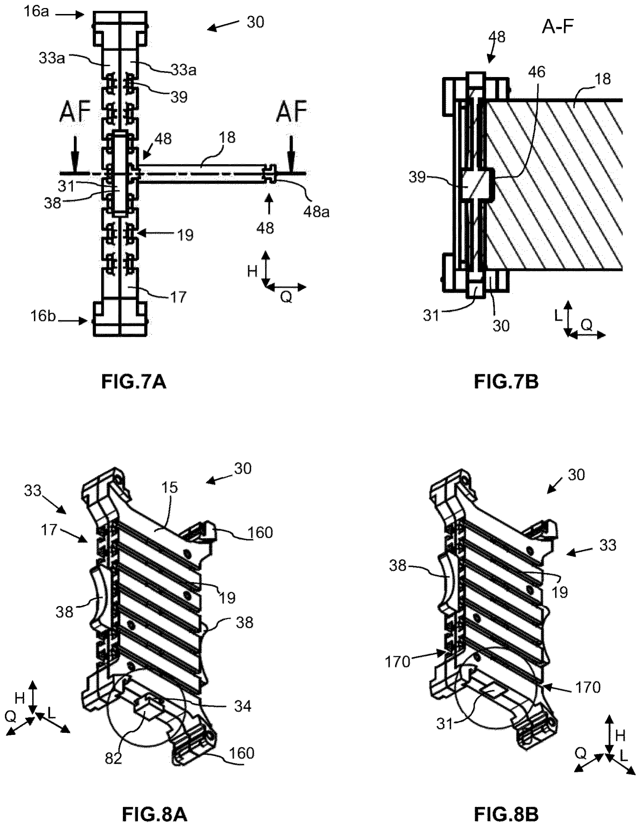

FIG.7A zeigt in Seitenansicht entlang der Längsrichtung L den Teilungssteg 30 mit einem in eine Haltenut 19 eingeschobenen Fachboden 18 und dem Verriegelungsschieber 31 in der Verriegelungsposition. FIG. 7B zeigt den Schnitt durch die Hauptebene des Fachbodens 18, die sich in der Längsrichtung L und der Querrichtung Q erstreckt. Aus der Zusammenschau der FIG.7A und 7B ist am besten ersichtlich, dass der Fachboden 18 einerseits durch das T-Profil der Haltenut 19 gegen Verschiebung in der Höhenrichtung H und der Querrichtung Q gesichert ist und andererseits durch den Formschluss zwischen der Aussparung 46 des Fachbodens 18 und einem zugeordneten Riegelelement 39 des Verriegelungsschiebers 31 gegen Verschiebung in der Längsrichtung L gesichert ist.

Der Verriegelungsschieber 31 ist punktsymmetrisch sowie spiegelsymmetrisch ausgebildet, mit jeweils drei Symmetrieebenen. Dadurch kann er die Fachböden 18 beidseitig des Teilungsstegs 30 sichern und in beide Richtungen entlang der Vertikale entriegelt werden. Das ist besonders vorteilhaft bei einem Kettenglied 10, bei dem beide Querstege 12 als Öffnungsstege ausgeführt sind. Der Verriegelungsschieber 31 kann nach Bedarf so an jedem der Querstege 12 entriegelt werden.

Der Verriegelungsschieber 31 kann aus der Verriegelungsposition in beide Richtungen entlang der Höhenrichtung H in die Entriegelungsposition verstellt werden. Neben einem Verstellen durch die Betätigungsvorsprünge 38 kann die Verriegelung auch durch Drücken auf den vertikalen Balken 311 erreicht werden. Die Enden des vertikalen Balken 311 bilden dazu jeweils einen Endvorsprung 82, der aus dem Grundkörper 33 vorstehen kann. In der Entriegelungsposition des im Grundkörper 33 aufgenommenen Verriegelungsschiebers 31 tritt, je nachdem in welche Richtung entlang der Höhenrichtung H der Verriegelungsschieber 31 zum Entriegeln verschoben ist, einer der Endvorsprünge 82 aus dem Grundkörper 33 heraus, wie FIG.8A zeigt. Durch Einschieben des Endvorsprungs 82 im gezeigten Fall nach oben bewegt sich der Verriegelungsschieber 31 in die Verriegelungsposition. Dies kann insbesondere durch ein Schließen eines geöffneten Querstegs 12 erfolgen. Dadurch kann verhindert werden, dass nicht verriegelte Teilungsstege 30 in einem geschlossenen, betriebsbereiten Kettenglied 10 verbleiben bzw. eine selbsttätige Verriegelung bewirkt werden.

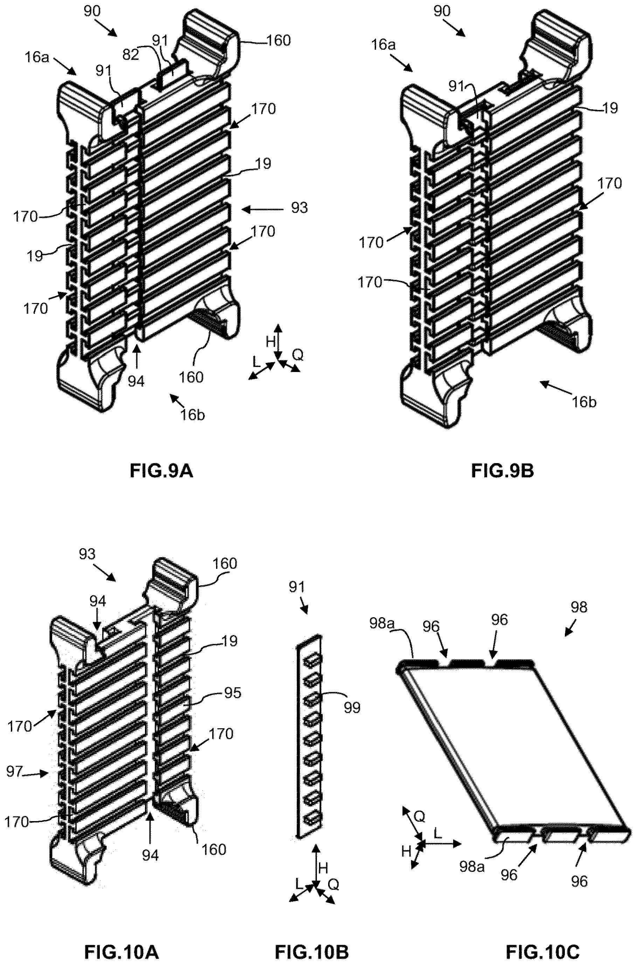

FIG.9A bis FIG.11C zeigen ein weiteres, zweites Ausführungsbeispiel des Teilungsstegs 90. Ein Unterschied zu dem Teilungssteg 30 besteht darin, dass der Grundkörper 93 des Teilungsstegs 90 einteilig hergestellt sein kann. Der einteilige Grundkörper 93, wie FIG.10A zeigt, ist plattenartig ausgebildet und weist zwei einander abgewandte Hauptseiten 95 auf, die parallel zur Hauptebene verlaufen, sowie zwei einander abgewandte Schmalseiten 97, die sich jeweils senkrecht zu den Hauptseiten 95 in der Höhenrichtung H von dem oberen Endbereich 16a zum unteren Endbereich 16b erstrecken. Die Endbereiche 16a, 16b sind analog zum oben beschriebenen Ausführungsbeispiel mit Rastfüßen 160 ausgestattet. Der Grundkörper 93 weist an seinen Hauptseiten 95 jeweils mehrere identische Haltenuten 19 zur Aufnahme von Fachböden 18 auf. Die Haltenuten 19 erstrecken sich parallel zueinander und durchgehend von einer Schmalseite 97 zu der anderen senkrecht zur Höhenrichtung H. Jede Haltenut 19 mündet an jeder Schmalseite 97 in eine von zwei endseitigen Einführöffnungen 170. Ein entsprechend profiliertes Ende eines Fachbodens 18 kann in die jeweilige Haltenut 19 von jeder Schmalseite 97 her, d.h. in jeder der zwei Montagerichtungen entlang der Längsrichtung L bzw. der Breite des Teilungsstegs 90 und des Fachbodens 18, eingeschoben und herausgenommen werden.

In FIG.9A bis FIG.11C weist der Teilungssteg 90 zum Sichern des eingebauten Fachbodens 18 in der Haltenut 19 zwei Verriegelungsschieber 91 auf, jeweils einen für jede Hauptseite 95 des Grundkörpers 93. Jeder der Verriegelungsschieber 91 ist in einer jeweiligen Aufnahme 94 entlang der Höhenrichtung H verschieblich. Die Aufnahmen 94 sind als Vertiefungen an der jeweiligen Hauptseite 95 des Grundkörpers 93 ausgebildet. Der Grundkörper 93 weist eine Zentralsymmetrie auf, sodass der Teilungssteg 90 auch um 180° um die Höhenrichtung H, die Längsrichtung L oder die Querrichtung Q umgedreht einsetzbar ist.

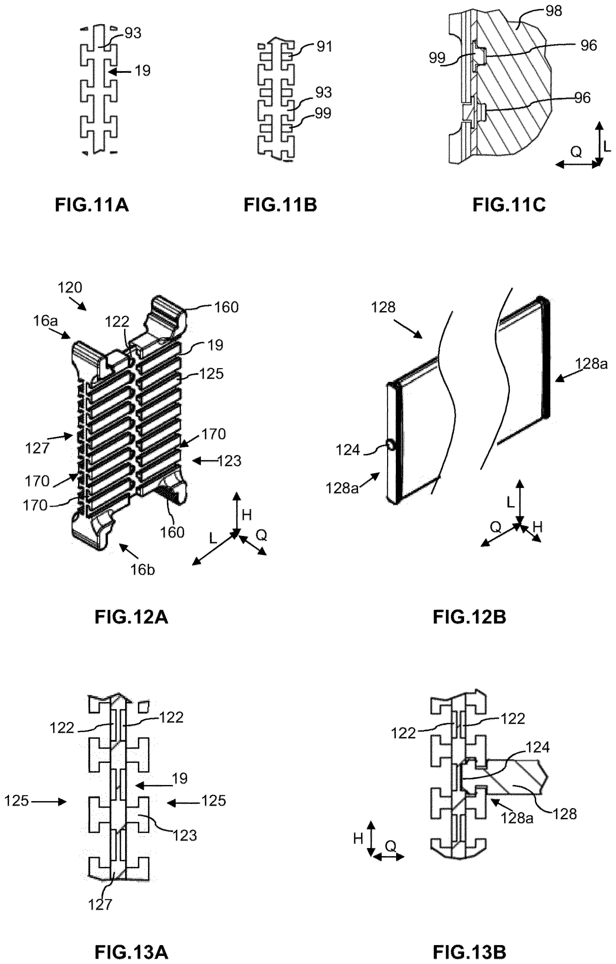

Die beiden Verriegelungsschieber 91 sind hier identisch. Wie in FIG. 10B dargestellt, hat der Verriegelungsschieber 91 die Form eines langgestreckten Streifens bzw. Balkens mit mehreren Riegelelementen 99, die als Vorsprünge ausgebildet sind. In einer Entriegelungsposition des Verriegelungsschiebers 91, wie in FIG.9A bzw. als Detailausschnitt in FIG. 11A dargestellt, befinden sich die Vorsprünge bzw. die Riegelelemente 99 bzgl. der Höhenrichtung H zwischen den Haltenuten 19, sodass die Enden der Fachböden 98 in die Haltenuten 19 eingeschoben bzw. herausgeschoben werden können.

Der Fachboden 98 ist plattenartig ausgebildet und weist an seinen Enden zur Zusammenwirkung mit den Haltenuten 19, jeweils einen T-förmigen Vorsprung 98a entsprechend dem Profil der Haltenut 19 auf. Als weiterer Unterschied zum ersten Beispiel weist das jeweilige Ende des Fachbodens 98 hier nicht zwei Aussparungen 96 auf, die jeweils ein Riegelelement 99 aufnehmen können. Somit kann der Fachboden 98 spiegelsymmetrisch gestaltet werden. Der Abstand der jeweiligen Aussparung 96 von der jeweiligen Längsschmalseite des Fachbodens 98 in Längsrichtung L entspricht dem Abstand der jeweiligen Aufnahme 94 von der nächstliegenden Schmalseite des Grundkörpers 93. Denkbar ist auch eine Ausführungsform ohne Aussparungen 96 am Fachboden mit endseitiger Verriegelung an beiden Stirnkanten.

Wenn der Verriegelungsschieber 91 in der Aufnahme 94 in Höhenrichtung H in die Verriegelungsposition verstellt bzw. verschoben ist, wie in FIG.9B bzw. FIG.11B (ohne Fachboden) oder in FIG. 11C in gezeigt, erstrecken sich die Riegelelemente 99 senkrecht zur Hauptseite 95 in die Haltenuten 19. In dieser Position des Verriegelungsschiebers ist der Fachboden 98 gegen ein ungewolltes Verschieben entlang der Haltenut 19 gesichert.

FIG.12A-13B zeigen ein weiteres Ausführungsbeispiel des Teilungsstegs 120, der einteilig hergestellt ist, hier jedoch ohne Verriegelungsschieber. Der Teilungssteg 120 hat wie im oben dargestellten Beispiel auch einen symmetrischen plattenartigen Grundkörper 123 mit zwei Hauptseiten 125 und zwei Schmalseiten 127. Die Hauptseiten 125 weisen jeweils eine Reihe profilierter Haltenuten 19 zum Aufnehmen und formschlüssigen Halten eines Endes 128a eines Fachbodens 128. Die Haltenuten 19 verlaufen auch in diesem Ausführungsbeispiel durchgehend von einer Schmalseite 127 zur anderen und öffnen bzw. münden beidseitig d.h. jeweils in einer Einführöffnung 170 an jeder der Schmalseiten 127. Die Fachböden 128 haben an ihren Enden dem Profil der Haltenut 19 entsprechenden in der Längsrichtung L erstreckenden Vorsprung. Die Sicherung der in die Haltenuten 19 eingeschobenen Fachböden 128 gegen Verschieben entlang der Haltenut 19 erfolgt hier durch Verrasten von Rastelementen. Hierzu sind Rastnocken 124 an Enden 128a der Fachböden 128 ausgebildet, die in entsprechende Rastvertiefungen 122 an den Hauptseiten 125 des Grundkörpers 123 einrasten. Auch eine invertierte Gestaltung mit Rastnocken am Grundkörper ist denkbar.

Sämtliche oben beschriebene Bauteile des Kettenglieds 10 und insbesondere des Teilungsstegs 20, 30, 90, 120 sind vorzugsweise als Kunststoffteile im Spritzgussverfahren hergestellt.

### Bezugszeichenliste

FIG.1, 2A, 2B:
   - 1: Energieführungskette
   - 10: Kettenglied
   - 11: Seitenlasche
   - 12: Quersteg
   - 13: Grundkörper des Teilungsstegs
   - 14: Aufnahmeraum
   - 15: Hauptseite des Grundkörpers
   - 16a, 16b: Endbereiche des Teilungsstegs
   - 17: Schmalseite des Grundkörpers
   - 18: Fachboden
   - 19: Haltenut
   - 20: Teilungssteg
   - 23: Stirnseiten des Querstegs
   - 110: Hörner der Seitenlaschen
   - 140: Fächer des Aufnahmeraums
   - 160: Rastfuß des Teilungsstegs
   - 170: Einführöffnung der Haltenut
   - H: Höhenrichtung
   - L: Längsrichtung
   - Q: Querrichtung
FIG.3 - 8:
   - 15: Hauptseite des Grundkörpers
   - 17: Schmalseite des Grundkörpers
   - 18: Fachboden
   - 19: Haltenut
   - 30: Teilungssteg
   - 31: Verriegelungsschieber
   - 32: Ausnehmung
   - 33: Grundkörper des Teilungsstegs
   - 34: Aufnahme
   - 33a: Plattenteil des Grundkörpers
   - 35: Außenseite des Plattenteils
   - 36: Innenseite des Plattenteils
   - 37a: Rastvorsprünge
   - 37b: Vertiefungen
   - 38: Betätigungsvorsprung
   - 39: Riegelelement
   - 46: Aussparung am Fachboden
   - 48: Enden des Fachbodens
   - 48a: Vorsprung am Ende des Fachbodens
   - 82: Endvorsprung des Verriegelungsschiebers
   - 170: Einführöffnung der Haltenut
   - 311: vertikale Balken
   - 312: horizontale Balken
   - H: Höhenrichtung
   - L: Längsrichtung
   - Q: Querrichtung
FIG.9-11:
   - 16a, 16b: Endbereich des Teilungsstegs
   - 18, 98: Fachboden
   - 19: Haltenut
   - 90: Teilungssteg
   - 91: Verriegelungsschieber
   - 93: Grundkörper des Teilungsstegs
   - 94: Aufnahme
   - 95: Hauptseite des Grundkörpers
   - 96: Aussparung am Fachboden
   - 97: Schmalseite des Grundkörpers
   - 98a: Vorsprung am Ende des Fachbodens
   - 99: Riegelelement
   - 160: Rastfuß
   - 170: Einführöffnung der Haltenut
   - H: Höhenrichtung
   - L: Längsrichtung
   - Q: Querrichtung
FIG. 12-13:
   - 19: Haltenut
   - 120: Teilungssteg
   - 122: Rastvertiefung
   - 123: Grundkörper
   - 124: Rastnocken am Fachboden
   - 125: Hauptseite des Grundkörpers
   - 127: Schmalseite des Grundkörpers
   - 128: Fachboden
   - 128a: Ende des Fachbodens
   - 170: Einführöffnung der Haltenut
   - H: Höhenrichtung
   - L: Längsrichtung
   - Q: Querrichtung

## Patentansprüche

1. Teilungssteg (20; 30; 90; 120) zur Innenaufteilung eines Kettenglieds (10) einer Energieführungskette, wobei das Kettenglied (10) zwei Seitenlaschen (11) aufweist, die durch mindestens einen Quersteg (12) miteinander verbunden sind und einen Aufnahmeraum (14) für Leitungen definieren, der Teilungssteg (20; 30; 90; 120) umfassend:
einen plattenartigen Grundkörper (13; 33; 93; 123) mit einem oberen Endbereich (16a), einem unteren Endbereich (16b) und mit zwei Hauptseiten (15; 95; 125) sowie zwei gegenüberliegenden Schmalseiten (17; 97; 127), welche sich in einer Höhenrichtung (H) zwischen den Endbereichen (16a, 16b) erstrecken; wobei zumindest einer der Endbereiche (16a, 16b) zum lösbaren Befestigen an einem Quersteg (12) ausgeführt ist; und
wobei an beiden Hauptseiten (15; 95; 125) jeweils eine Anzahl Haltenuten (19) vorgesehen sind, welche sich im Wesentlichen senkrecht zur Höhenrichtung (H) erstrecken und in welche jeweils ein Ende eines plattenartigen Fachbodens (18) zur Innenaufteilung eingeschoben und gehaltert werden kann;
**dadurch gekennzeichnet, dass**
jede Haltenut (19) jeweils von der einen zur anderen Schmalseite (17; 97; 127) durchgehend ausgeführt ist und an jeder Schmalseite (17; 97; 127) eine Einführöffnung (170) aufweist, sodass ein Fachboden (18) jeweils von beiden Seiten durch die entsprechende Einführöffnung (170) wahlweise in einer von zwei entgegengesetzten Montagerichtungen in die jeweiligen Haltenuten (19) einführbar und daraus wieder entnehmbar ist; und dass
der Teilungssteg (20; 30; 90; 120) eine Sicherungseinrichtung aufweist, welche montierte Fachböden (18) gegen ungewolltes Verschieben in beiden Montagerichtungen und damit gegen ungewolltes Lösen aus der jeweiligen Haltenut (19) sichert.

2. Teilungssteg (20; 30; 90) nach Anspruch 1, **dadurch gekennzeichnet, dass** die Sicherungseinrichtung einen Verriegelungsschieber (31; 91) aufweist, welcher in einer Aufnahme (34; 94) im Grundkörper (33; 93) in Höhenrichtung (H) zwischen einer Verriegelungsposition und einer Entriegelungsposition verschieblich ist und Riegelelemente (39; 99) aufweist, wobei jedes Riegelelement (39; 99) einer Haltenut (19) zugeordnet und in diese verschiebbar ist zur sichernden Zusammenwirkung mit einem Fachboden (18).

3. Teilungssteg (20; 30) nach Anspruch 2, **dadurch gekennzeichnet, dass** der plattenartige Grundkörper (33) zwei Plattenteile (33a) umfasst, welche jeweils an einer Außenseite (35) eine Anzahl durchgehende Haltenuten (19) bilden, an einer Innenseite (36) eine Ausnehmung (32) für den Verriegelungsschieber (31) bilden und durch Verbindungselemente (37a, 37b) miteinander verbindbar sind, insbesondere durch konjugierte Verbindungselemente (37a, 37b) miteinander verrastbar sind.

4. Teilungssteg (20; 30) nach Anspruch 2 und/oder 3, **dadurch gekennzeichnet, dass** die Sicherungseinrichtung aus einem Verriegelungsschieber (31) besteht, der mittig im Grundkörper (33) angeordnet ist.

5. Teilungssteg (20; 30) nach einem der Ansprüche 1 bis 4,
**dadurch gekennzeichnet, dass** der Verriegelungsschieber (31) mindestens einen Betätigungsvorsprung (38) aufweist, welcher an einer Schmalseite (17) des Grundkörpers (33) vorsteht, vorzugsweise zwei gegenüberliegende, vorzugsweise symmetrische Betätigungsvorsprünge (38) aufweist, welche jeweils an einer der Schmalseiten (17) des Grundkörpers (33) vorstehen.

6. Teilungssteg (90) nach Anspruch 2, **dadurch gekennzeichnet, dass** die Sicherungseinrichtung zwei Verriegelungsschieber (91) aufweist, welche jeweils in einer Aufnahme (94) im Grundkörper (93) in Höhenrichtung (H) zwischen einer Verriegelungsposition und einer Entriegelungsposition verschieblich ist und Riegelelemente (99) aufweisen, wobei jedes Riegelelement (99) einer Haltenut (19) zugeordnet und in diese verschiebbar ist zur sichernden Zusammenwirkung mit einem Fachboden (98), wobei der Grundkörper (93) vorzugsweise zwei senkrecht zur Höhenrichtung (H) versetzte Aufnahmen (94) für je einen Verriegelungsschieber (91) aufweist.

7. Teilungssteg (20; 30; 90) nach einem der Ansprüche 2 bis 6,
**dadurch gekennzeichnet, dass** der bzw. die Verriegelungsschieber (31; 91) in Entriegelungsposition mit einem Endvorsprung (82) am oberen oder unteren Endbereich (16a, 16b) des Grundkörpers (33; 93) in Höhenrichtung (H) vorsteht bzw. vorstehen.

8. Teilungssteg (120) nach Anspruch 1, **dadurch gekennzeichnet, dass** die Sicherungseinrichtung Rastelemente (124) aufweist, insbesondere zusammenwirkende Rastvertiefungen (122) und/oder Rastvorsprünge, wobei an jeder Haltenut (19) mindestens ein Rastelement, vorzugsweise eine Rastvertiefung (122) und/oder ein Rastvorsprung, vorgesehen ist zur rastenden Zusammenwirkung mit einem entsprechenden Rastelement (124) an einem Fachboden (128).

9. Teilungssteg (20; 30; 90; 120) nach einem der Ansprüche 1 bis 8, **dadurch gekennzeichnet, dass**
- die Haltenuten (19) an beiden Hauptseiten (15; 95; 125) jeweils einen Querschnitt in T-Form aufweisen, um mit einem entsprechenden im Querschnitt T-förmigen Vorsprung (48a; 98a) am Ende (48) eines Fachbodens (18) zur Halterung zusammenzuwirken; und/oder
- die Haltenuten (19) sich zueinander parallel und jeweils senkrecht zur Höhenrichtung (H) durchgehend erstrecken, wobei vorzugsweise an jeder Hauptseite (15; 95; 125) jeweils zwei Haltenuten (19) auf gleicher Höhe voneinander abgewandt vorgesehen sind.

10. Teilungssteg (20; 30; 90; 120) nach einem der Ansprüche 1 bis 9, **dadurch gekennzeichnet, dass**
beide Endbereiche (16a, 16b) des Grundkörpers (13; 93; 123) eine Befestigungsvorrichtung zum lösbaren Befestigen durch Kraft- und/oder Formschluss an einem oberen und einem unteren Quersteg (12) bilden und vorzugsweise als Rastfuß (160) zum Verrasten mit einem Quersteg (12) ausgeführt sind.

11. Teilungssteg (20; 30; 90; 120) nach einem der Ansprüche 1 bis 10, **dadurch gekennzeichnet, dass**
- der Grundkörper (13; 93; 123) bezüglich seiner Höhenmittelebene spiegelsymmetrisch ausgeführt ist; und/oder
- der Grundkörper bezüglich seiner Hauptebene spiegelsymmetrisch ausgeführt ist; oder
- der Grundkörper bezüglich seiner Höhenmittelachse axialsymmetrisch ausgeführt ist.

12. Teilungssteg (20; 30; 90; 120) nach einem der Ansprüche 1 bis 11, **dadurch gekennzeichnet, dass** an jeder Hauptseite (15; 95; 125) jeweils mindestens fünf Haltenuten (19) vorgesehen sind.

13. Teilungssteg (20; 30; 90; 120) nach einem der Ansprüche 1 bis 12, **dadurch gekennzeichnet, dass** die beiden Einführöffnungen (170) jeder Haltenut (19) jeweils gegenüberliegende endseitige Einführschrägen oder Einführrundungen aufweisen.

14. Kettenglied (10) für eine Energieführungskette, umfassend zwei Seitenlaschen (11) und mindestens einen Quersteg (12), welcher die Seitenlaschen (11) miteinander verbindet, um einen Aufnahmeraum (14) für Leitungen zu definieren;
**dadurch gekennzeichnet, dass**
zur Innenaufteilung im Aufnahmeraum zwei Teilungsstege (20) nach einem der vorstehenden Ansprüche 1 bis 13 parallel zu den Seitenlaschen (11) sowie mindestens ein durch die Teilungsstege (20) jeweils endseitig gehaltener Fachboden (18) parallel zum Quersteg (12) vorgesehen ist.

15. Energieführungskette (1) umfassend eine Vielzahl Kettenglieder,
**dadurch gekennzeichnet, dass** zumindest jedes zweite Kettenglied als Kettenglied (10) nach Anspruch 14 ausgeführt ist.

16. Bausatz zur Innenaufteilung von Kettengliedern (10) für eine Energieführungskette, umfassend mindestens zwei Teilungsstege (20; 30; 90; 120) nach einem der vorstehenden Ansprüche 1 bis 13 sowie einen korrespondierenden Fachboden (18).

## Claims

1. A dividing bar (20; 30; 90; 120) for internal division of a chain link (10) of an energy guide chain, wherein the chain link (10) has two side plates (11) which are connected together by at least one transverse bar (12) and define a receiving space (14) for lines, the dividing bar (20; 30; 90; 120) including:
a plate-like main body (13; 33; 93; 123) having an upper end region (16a), a lower end region (16b) and two main sides (15; 95; 125) and two opposite narrow sides (17; 97; 127) which extend in a heightwise direction (H) between the end regions (16a, 16b), wherein at least one of the end regions (16a, 16b) is adapted for releasable fixing to a transverse bar (12); and
wherein provided at both main sides (15; 95; 125) is a respective number of holding grooves (19) which extend substantially perpendicularly to the heightwise direction (H) and into which a respective end of a plate-like shelf (18) for internal division can be inserted and held,
**characterised in that**
each holding groove (19) is of a continuous configuration respectively from the one narrow side (17; 97; 127) to the other and at each narrow side (17; 97; 127) has an insertion opening (170) so that a shelf (18) can be respectively introduced into the respective holding grooves (19) and removed again therefrom from both sides through the corresponding insertion opening (170) selectively in one of two opposite assembly directions, and
the dividing bar (20; 30; 90; 120) has a securing device which secures fitted shelves (18) from unwanted displacement in both assembly directions and thus against unwanted release from the respective holding groove (19).

2. A dividing bar (20; 30; 90) according to claim 1 **characterised in that** the securing device has a locking slider (31; 91) which is displaceable in a receiving means (34; 94) in the main body (33; 93) in the heightwise direction (H) between a locking position and an unlocking position and has lock elements (39; 99), wherein each lock element (39; 99) is associated with a holding groove (19) and is displaceable into same for securing cooperation with a shelf (18).

3. A dividing bar (20; 30) according to claim 2 **characterised in that** the plate-like main body (33) has two plate portions (33a) which respectively form a number of continuous holding grooves (19) at an outside (35), form a recess (32) for the locking slider (31) at an inside (36) and can be connected together by connecting elements (37a, 37b), and in particular can be latched to each other by conjugate connecting elements (37a, 37b).

4. A dividing bar (20; 30) according to claim 2 and/or claim 3
**characterised in that** the securing device comprises a locking slider (31) arranged centrally in the main body (33).

5. A dividing bar (20; 30) according to one of claims 1 to 4
**characterised in that** the locking slider (31) has at least one actuating projection (38) which projects at a narrow side (17) of the main body (33), and preferably has two opposite, preferably symmetrical actuating projections (38) which respectively project at one of the narrow sides (17) of the main body (33).

6. A dividing bar (90) according to claim 2 **characterised in that** the securing device has two locking sliders (91) which are respectively displaceable in a receiving means (94) in the main body (93) in the heightwise direction (H) between a locking position and an unlocking position and have lock elements (99), wherein each lock element (99) is associated with a holding groove (19) and is displaceable into same for securing cooperation with a shelf (98), wherein the main body (93) preferably has two receiving means (94) which are perpendicularly displaced in relation to the heightwise direction (H) for a respective locking slider (91).

7. A dividing bar (20; 30; 90) according to one of claims 2 to 6
**characterised in that** the locking slider or sliders (31; 91) projects or project in the heightwise direction (H) in the unlocking position with an end projection (82) at the upper or lower end region (16a, 16b) of the main body (33; 93).

8. A dividing bar (120) according to claim 1 **characterised in that** the securing device has latching elements (124), in particular cooperating latching depressions (122) and/or latching projections, wherein provided at each holding groove (19) is at least one latching element, preferably a latching depression (122) and/or a latching projection, for latching cooperation with a corresponding latching element (124) on a shelf (128).

9. A dividing bar (20; 30; 90; 120) according to one of claims 1 to 8
**characterised in that**
- the holding grooves (19) have a respective cross-section of T-shape at both main sides (15; 95; 125) to cooperate with a corresponding projection (48a; 98a) of T-shaped cross-section at the end (48) of a shelf (18) for holding purposes; and/or
- the holding grooves (19) continuously extend in mutually parallel relationship and respectively perpendicularly to the heightwise direction (H), wherein preferably two respective holding grooves (19) are provided facing away from each other at the same height at each main side (15; 95; 125).

10. A dividing bar (20; 30; 90; 120) according to one of claims 1 to 9
**characterised in that** both end regions (16a, 16b) of the main body (13; 93; 123) form a fixing device for releasable fixing by force-locking and/or positively locking relationship at an upper and a lower transverse bar (12) and are preferably in the form of a latching foot (160) for latching to a transverse bar (12).

11. A dividing bar (20; 30; 90; 120) according to one of claims 1 to 10 **characterised in that**
- the main body (13; 93; 123) is of a mirror-image symmetrical configuration with respect to its heightwise central plane; and/or
- the main body is of a mirror-image symmetrical configuration with respect to its main plane; or
- the main body is of an axially symmetrical configuration with respect to its heightwise central axis.

12. A dividing bar (20; 30; 90; 120) according to one of claims 1 to 11 **characterised in that** at least five holding grooves (19) are respectively provided at each main side (15; 95; 125).

13. A dividing bar (20; 30; 90; 120) according to one of claims 1 to 12 **characterised in that** the two insertion openings (170) of each holding groove (19) respectively have opposite end inclined insertion portions or rounded insertion portions.

14. A chain link (10) for an energy guide chain, including two side plates (11) and at least one transverse bar (12) which connects the side plates (11) together to define a receiving space (14) for lines,
**characterised in that** for internal division in the receiving space two dividing bars (20) according to one of preceding claims 1 to 13 are provided in parallel relationship with the side plates (11) and at least one shelf (18) respectively held at its ends by the dividing bars (20) is provided in parallel relationship with the transverse bar (12).

15. An energy guide chain (1) including a plurality of chain links
**characterised in that** at least each second chain link is in the form of a chain link (10) according to claim 14.

16. A construction kit for the internal division of chain links (10) for an energy guide chain, including at least two dividing bars (20; 30; 90; 120) according to one of preceding claims 1 to 13 and a corresponding shelf (18).

## Revendications

1. Séparateur (20; 30; 90; 120) pour la division interne d'un maillon de chaîne (10) d'une chaîne de transmission d'énergie, le maillon de chaîne (10) comprenant deux pattes latérales (11) reliées entre elles par au moins une traverse (12) et définissant un espace de réception (14) pour des conduites, le séparateur (20; 30; 90; 120) comprenant:
un corps de base en forme de plaque (13; 33; 93; 123) avec une partie d'extrémité supérieure (16a), une partie d'extrémité inférieure (16b) et avec deux côtés principaux (15; 95; 125) ainsi que deux côtés étroits opposés (17; 97; 127) qui s'étendent dans un sens de la hauteur (H) entre les parties d'extrémité (16a, 16b); au moins une des parties d'extrémité (16a, 16b) étant conçue pour être fixée de manière amovible à une traverse (12); et
dans lequel il est prévu sur chacun des deux côtés principaux (15; 95; 125) un certain nombre de rainures de retenue (19) qui s'étendent sensiblement perpendiculairement au sens de la hauteur (H) et dans chacune desquelles une extrémité d'une tablette en forme de plaque (18) peut être insérée et retenue pour la division interne;
**caractérisé en ce que**
chaque rainure de retenue (19) est réalisée en continu d'un côté étroit à l'autre (17; 97; 127) et présente une ouverture d'introduction (170) sur chaque côté étroit (17; 97; 127), de sorte qu'une tablette (18) peut être introduite dans les rainures de retenue respectives (19) et retirée des rainures de retenue à travers l'ouverture d'introduction correspondante (170) au choix dans l'un de deux sens de montage opposés; et **en ce que**
le séparateur (20; 30; 90; 120) présente un dispositif de sécurité qui empêche les tablettes montées (18) de se déplacer involontairement dans les deux sens de montage et donc de se détacher involontairement de la rainure de retenue (19) respective.

2. Séparateur (20; 30; 90) selon la revendication 1,
**caractérisé en ce que** le dispositif de sécurité présente un coulisseau de verrouillage (31; 91) qui peut être déplacé dans un logement (34; 94) dans le corps de base (33; 93) dans le sens de la hauteur (H) entre une position de verrouillage et une position de déverrouillage et qui présente des éléments de verrouillage (39; 99), chaque élément de verrouillage (39; 99) étant affecté à une rainure de retenue (19) et pouvant être déplacé dans celle-ci pour une coopération sécurisante avec une tablette (18).

3. Séparateur (20; 30) selon la revendication 2,
**caractérisé en ce que** le corps de base en forme de plaque (33) comprend deux parties de plaque (33a) qui forment chacune un certain nombre de rainures de retenue continues (19) sur un côté extérieur (35), forment un évidement (32) pour le coulisseau de verrouillage (31) sur un côté intérieur (36) et peuvent être reliées entre elles par des éléments de liaison (37a, 37b), en particulier peuvent être encliquetées entre elles par des éléments de liaison conjugués (37a, 37b).

4. Séparateur (20; 30) selon la revendication 2 et/ou 3,
**caractérisé en ce que** le dispositif de sécurité est constitué d'un coulisseau de verrouillage (31) qui est disposé au centre du corps de base (33).

5. Séparateur (20; 30) selon l'une quelconque des revendications 1 à 4, **caractérisé en ce que** le coulisseau de verrouillage (31) comporte au moins une saillie d'actionnement (38) qui fait saillie sur un petit côté (17) du corps de base (33), de préférence deux saillies d'actionnement (38) opposées, de préférence symétriques, qui font chacune saillie sur l'un des petits côtés (17) du corps de base (33).

6. Séparateur (90) selon la revendication 2, **caractérisé en ce que** le dispositif de sécurité comporte deux coulisseaux de verrouillage (91) qui peuvent être déplacés chacun dans un logement (94) dans le corps de base (93) dans le sens de la hauteur (H) entre une position de verrouillage et une position de déverrouillage et qui comportent des éléments de verrouillage (99), chaque élément de verrouillage (99) étant affecté à une rainure de retenue (19) et pouvant être déplacé dans celle-ci pour coopérer de manière sécurisant avec une tablette (98), le corps de base (93) présentant de préférence deux logements (94) décalés perpendiculairement au sens de la hauteur (H) pour un coulisseau de verrouillage (91) respectif.

7. Séparateur (20; 30; 90) selon l'une quelconque des revendications 2 à 6, **caractérisée en ce que** le ou les coulisseaux de verrouillage (31; 91) font saillie dans le sens de la hauteur (H) en position de déverrouillage avec une saillie d'extrémité (82) sur les parties d'extrémité supérieure et inférieure (16a, 16b) du corps de base (33; 93).

8. Séparateur (120) selon la revendication 1, **caractérisé en ce que** le dispositif de sécurité présente des éléments d'encliquetage (124), en particulier des creux d'encliquetage (122) et/ou des saillies d'encliquetage coopérants, au moins un élément d'encliquetage, de préférence un creux d'encliquetage (122) et/ou une saillie d'encliquetage, étant prévu sur chaque rainure de retenue (19) pour la coopération par encliquetage avec un élément d'encliquetage (124) correspondant sur une tablette (128).

9. Séparateur (20; 30; 90; 120) selon l'une quelconque des revendications 1 à 8, **caractérisé en ce que**
- les rainures de retenue (19) présentent chacune une section transversale en forme de T sur les deux côtés principaux (15; 95; 125) afin de coopérer avec une saillie (48a; 98a) correspondante de section transversale en forme de T à l'extrémité d'une tablette (18) pour le support; et/ou
- les rainures de maintien (18) s'étendent en continu parallèlement les unes aux autres et respectivement perpendiculairement au sens de la hauteur (H), deux rainures de retenue (19) étant de préférence prévues sur chaque côté principal (15; 95; 125) respectivement à la même hauteur et détournée l'une de l'autre.

10. Séparateur (20; 30; 90; 120) selon l'une quelconque des revendications 1 à 9, **caractérisé en ce que**
les deux parties d'extrémité (16a, 16b) du corps de base (13; 93; 123) forment un dispositif de fixation pour la fixation amovible par adhérence et/ou par complémentarité de forme à une traverse (12) supérieure et inférieure et sont réalisées de préférence sous forme de pied d'encliquetage (160) pour l'encliquetage avec une traverse (12).

11. Séparateur (20; 30; 90; 120) selon l'une quelconque des revendications 1 à 10, **caractérisé en ce que**
- le corps de base (13; 93; 123) est réalisé avec une symétrie spéculaire par rapport à son plan médian en hauteur; et/ou
- le corps de base est réalisé avec une symétrie spéculaire par rapport à son plan principal; ou
- le corps de base est réalisé avec une symétrie axiale par rapport à son axe médian en hauteur.

12. Séparateur (20; 30; 90; 120) selon l'une quelconque des revendications 1 à 11, **caractérisé en ce que** sur chaque côté principal (15; 95; 125) sont prévues respectivement au moins cinq rainures de retenue (19).

13. Séparateur (20; 30; 90; 120) selon l'une quelconque des revendications 1 à 12, **caractérisé en ce que** les deux ouvertures d'introduction (170) de chaque rainure de retenue (19) présentent respectivement des biseaux d'introduction ou des ronds d'introduction opposés côté extrémité.

14. Maillon de chaîne (10) pour une chaîne de transmission d'énergie, comprenant deux pattes latérales (11) et au moins une traverse (12) qui relie les pattes latérales (11) entre elles pour définir un espace de réception (14) pour des conduites;
**caractérisé en ce que,**
pour la division interne dans l'espace de réception, deux séparateurs (20) selon l'une quelconque des revendications 1 à 13 précédentes sont prévus parallèlement aux pattes latérales (11) ainsi qu'au moins une tablette (18) retenue à chaque extrémité par les séparateurs (20) parallèlement à la traverse (12) .

15. Chaîne de transmission d'énergie (1), comprenant une pluralité de maillons de chaîne, **caractérisée en ce qu'**au moins un maillon de chaîne sur deux est réalisé sous forme de maillon de chaîne (10) selon la revendication 14.

16. Kit de division interne de maillons de chaîne (10) pour une chaîne de transmission d'énergie, comprenant au moins deux séparateurs (20; 30; 90; 120) selon l'une quelconque des revendications 1 à 13 précédentes ainsi qu'une tablette (18) correspondante.
